(19) Europäisches Patentamt / European Patent Office / Office européen des brevets

(11) **EP 3 851 213 B1**

(12) **FASCICULE DE BREVET EUROPEEN**

(45) Date de publication et mention de la délivrance du brevet:
**08.05.2024 Bulletin 2024/19**

(21) Numéro de dépôt: **21151189.4**

(22) Date de dépôt: **12.01.2021**

(51) Classification Internationale des Brevets (IPC):
**B08B 7/02** *(2006.01)*    **B08B 17/02** *(2006.01)*
**G01N 21/94** *(2006.01)*

(52) Classification Coopérative des Brevets (CPC):
**B08B 7/028; B08B 17/02;** G01N 2021/945

(54) **SYSTÈME DE MESURE DESTINÉ A ÊTRE IMMERGÉ MUNI D'UN DISPOSITIF D'ANTI-ENCRASSEMENT**

UNTERWASSER-MESSSYSTEM, DAS MIT EINER ANTIFOULING-VORRICHTUNG AUSGESTATTET IST

MEASURING SYSTEM DESIGNED TO BE IMMERSED PROVIDED WITH AN ANTI-FOULING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.01.2020 FR 2000284**

(43) Date de publication de la demande:
**21.07.2021 Bulletin 2021/29**

(73) Titulaire: **Commissariat à l'énergie atomique et aux énergies alternatives**
**75015 Paris (FR)**

(72) Inventeurs:
• **CASSET, Fabrice**
**38054 GRENOBLE Cedex 09 (FR)**
• **GRILLI, Lucas**
**38054 GRENOBLE Cedex 09 (FR)**

(74) Mandataire: **Brevalex**
**Tour Trinity**
**1 B Place de la Défense**
**92400 Courbevoie (FR)**

(56) Documents cités:
WO-A1-2011/128406    WO-A2-2008/020887
US-B2- 9 116 102

## Description

## DOMAINE TECHNIQUE ET ÉTAT DE LA TECHNIQUE ANTÉRIEURE

La présente invention se rapporte à un système de mesure destiné à être immergé comportant un dispositif d'anti-encrassement.

Toute surface immergée dans un liquide, tel que l'eau de mer et l'eau douce, est sujette au dépôt et à l'adhésion d'organismes qui peuvent être des bactéries, des algues ou encore des mollusques. Ce phénomène est connu sous le nom de bio-encrassement ou biofouling en terminologie anglo-saxonne. Lorsque les conditions environnementales sont réunies, l'adhésion de microorganismes sur les matériaux et leur multiplication conduit à la formation d'un film en surface des matériaux. La formation de ce film se déroule en plusieurs étapes et peut être particulièrement rapide, par exemple quelques minutes.

L'apparition du biofouling est un problème majeur pour tous les dispositifs destinés à être immergés en milieu marin, notamment pour les dispositifs de mesure, puisque cet encrassement dégrade les mesures prises en milieu marin. Actuellement de nombreux équipements de contrôle de l'environnement marin sont présents dans tous les océans et mers de la planète. Ces équipements sont souvent mis en oeuvre sur des structures déjà existantes, comme les plateformes offshores ou les navires, mais peuvent aussi faire partie de stations océanographiques dédiées. Ils sont également utilisés pour le contrôle des réseaux d'acheminement des eaux potables et pour le contrôle des eaux fluviales. Ils présentent généralement une grande variété de capteurs, suivant des paramètres comme le taux d'oxygène dissous, la turbidité, la conductivité, le pH ou encore la fluorescence. La qualité des mesures réalisées par ces équipements peut être affectée par le biofouling se formant sur leur surface sensible après seulement quelques jours, c'est pourquoi des solutions anti-fouling sont nécessaires pour obtenir une qualité de données constante et diminuer la maintenance nécessaire à leur nettoyage.

Les systèmes anti-fouling sont soit de type chimique, soit de type mécanique. Les systèmes de type chimique consistent en l'application d'un revêtement chargé en biocides sur la surface à protéger. La toxicité des biocides contenus dans le revêtement permet de repousser et détruire les micro-organismes. Ces systèmes sont polluants, en outre ils libèrent des biocides jusqu'à épuisement, devenant alors inefficaces.

Les systèmes de type mécanique utilisent par exemple un essuie-glace afin de retirer les micro-organismes déposés sur la surface sensible. Or l'essuie-glace lui-même est sujet au biofouling. En outre il requiert une certaine maintenance pour rester efficace.

Le document "Application of Mechanical Waves Induced by Piezofilms to Marine Fouling Prévention", M. Rahmoune, M. Latour, 1995 Smart Mater. Struct. 4 195 décrit l'application de films piézoélectriques en PolyVinyliDene Fluoride (PVDF) sur une fine plaque de verre formant la fenêtre optique d'un capteur océanographique. Le film PVDF est un actionneur qui met en vibration la plaque de verre, lui procurant ainsi une résistance au biofouling en décollant les espèces voulant proliférer ou en empêchant leur adhérence. Le film PVDF ne peut mettre en vibration que des fines plaques de verre, les plaques épaisses étant trop rigides pour présenter une vibration significative. Or les plaques de verre formant les fenêtres optiques des capteurs sont soumises à un différentiel de pression, puisqu'une face de la plaque de verre est en contact avec l'eau et l'autre face est située à l'intérieur de la sonde et en contact avec de l'air. Ce qui implique donc une limite sur la profondeur à laquelle le capteur peut être utilise.

WO 2008/020887 A2 et US 9 116 102 B2 décrivent tous deux des systèmes de mesure destinés à être immergés dans un liquide, comportant au moins un capteur d'au moins un paramètre, et un dispositif anti-encrassement comportant au moins un élément disposé à proximité d'au moins une partie de la surface sensible, des moyens pour mettre en vibration ledit élément de sorte à générer une onde acoustique apte à au moins limiter la fixation de microorganismes sur la surface sensible, et une unité de commande configurée pour commander les moyens pour mettre en vibration l'élément.

## EXPOSÉ DE L'INVENTION

C'est par conséquent un but de la présente invention d'offrir un système de mesure muni d'un dispositif anti-encrassement ne présentant pas les inconvénients ci-dessus.

Le but énoncé ci-dessus est atteint par un système de mesure immergé selon la revendication 1 et un procédé correspondant selon la revendication 13.

La fréquence de vibration et l'amplitude peuvent être suffisantes pour générer des cavitations. La fréquence de vibration peut générer des ondes ultrasonores.

L'invention permet donc de réaliser un système de mesure immergé protégé du biofouling et pouvant être utilisé à la profondeur souhaitée.

En d'autres termes, on sépare la fonction de support de la surface sensible du capteur et la fonction d'anti-fouling. Ainsi il est possible de réaliser un support de surface sensible épais et donc permettant d'utiliser le capteur à des profondeurs importantes, tout en évitant ou au moins en limitant la formation d'un biofilm sur la surface sensible. Ainsi le capteur peut rester opérationnel plus longtemps.

Selon l'invention, les ondes acoustiques ne se propagent pas entre le transducteur mettant en vibration la plaque vibrante et la surface sensible par l'intermédiaire d'un lien mécanique, mais par l'intermédiaire du liquide dans lequel est immergé le capteur.

Il n'y pas de retrait ou de limitation de formation du biofilm par contact mécanique direct entre l'élément vibrant et la surface sensible. Le retrait ou la limitation de formation du biofilm est obtenu par la variation de pression générée par l'élément vibrant dans le liquide et qui agit sur les microorganismes en les repoussant ou en le détachant de la surface sensible

En outre, les moyens réalisant la fonction d'anti-fouling étant déportés, ils laissent la surface sensible en contact direct avec le milieu aquatique, ce qui est requis pour toutes les sondes/capteurs qui ne sont pas optiques, tels que les capteurs de température, pH, pression, conductivité électrique, etc. Ainsi, grâce à l'invention la protection contre le biofilm peut être appliquée que les capteurs soient en contact direct ou indirect avec le milieu aquatique et à toutes les formes de surfaces sensibles, telles que par exemple les surfaces planes, sphériques, en forme de cloches.

De manière avantageuse le ou les actionneurs sont des actionneurs piézoélectriques. Leur mode d'actionnement permet une bonne intégration du système et assure un bon couplage entre l'actionneur et la plaque vibrante.

Dans le cas d'un système de mesure optique, le support de surface sensible est par exemple un hublot transparent et l'élément apte à être mis en vibration est une plaque en verre transparente disposée en regard du hublot, qui ne perturbe pas le fonctionnement du capteur optique.

Le système anti-encrassement peut comporter plusieurs éléments disposés de sorte à entourer la surface sensible, par exemple lorsque celle-ci s'étend dans les trois dimensions de l'espace, par exemple lorsqu'elle est sphérique.

Dans un exemple de réalisation, l'élément a une forme de plaque plane ou non et les moyens pour mettre en vibration l'élément peuvent comporter au moins un actionneur fixé sur une des faces de l'élément.

De préférence, l'élément présente une épaisseur faible par rapport à ses deux autres dimensions.

Par exemple, l'élément est une plaque rectangulaire et les moyens pour mettre en vibration l'élément comportent au moins un actionneur le long de chacun de deux bords opposés de la plaque de sorte à pouvoir déformer la plaque par effet bilame.

De préférence, l'élément est suspendu à proximité de la surface sensible par des moyens de support autorisant sa mise en vibration.

L'élément est par exemple disposé en regard de la surface sensible.

Dans un exemple, la surface sensible est plane et l'élément est une plaque plane disposée à distance de la surface sensible.

Dans un autre exemple, la surface sensible est en trois dimensions et le dispositif anti-encrassement entoure la surface sensible.

Selon une caractéristique additionnelle, le dispositif anti-encrassement comporte plusieurs éléments.

Le capteur peut être un capteur optique, la surface sensible étant portée par un hublot, et l'élément est réalisé avec un matériau transparent.

Le au moins un actionneur est avantageusement un actionneur piézoélectrique.

L'unité de commande peut être configurée pour commander l'actionnement du dispositif anti-encrassement périodiquement.

Selon une caractéristique additionnelle, l'unité de commande actionne le dispositif anti-encrassement de sorte qu'il crée des cavitations.

Le système de mesure peut comporter un capteur optique et l'unité de commande peut être configurée pour commander le capteur optique pour qu'il vérifie la présence de microorganismes sur l'élément sensible, et pour actionner le dispositif anti-encrassement lorsque la présence de microorganismes est détectée et est considérée comme perturbant le fonctionnement du capteur. Selon une caractéristique additionnelle, le capteur optique est commandé pour déterminer l'emplacement des microorganismes, et le dispositif anti-encrassement peut être commandé pour générer un déplacement du liquide localisé au niveau desdits microorganismes.

La présente invention a également pour objet un procédé de fonctionnement du système de mesure selon l'invention, le système étant immergé dans un environnement liquide et le dispositif anti-encrassement est commandé pour au moins limiter le dépôt de microorganismes sur la surface sensible et/ou pour retirer les microorganismes déposés sur la surface sensible.

Par exemple, le dispositif anti-encrassement est activé périodiquement.

L'élément peut par exemple être mis en vibration de sorte que la variation de pression générée crée des cavitations dans le liquide.

Le procédé de fonctionnement peut comporter:

- la détermination du ou des emplacements de microorganismes sur la surface sensible,
- l'activation des moyens pour mettre en vibration les éléments pour provoquer un mouvement de liquide au niveau du ou des emplacements déterminés.

## BRÈVE DESCRIPTION DES DESSINS

La présente invention sera mieux comprise sur la base de la description qui va suivre et des dessins en annexe sur lesquels:

La figure 1 est une vue de côté représentée schématiquement d'un exemple de système de mesure,
La figure 2 est une vue de face du système de mesure de la figure 1.
La figure 3 est une vue de dessus d'un exemple de dispositif anti-encrassement pouvant être mis en oeuvre dans le système de mesure de la figure 1.
La figure 4 est une vue en coupe longitudinale selon le plan A-A du dispositif de la figure 3.
La figure 5 est une représentation schématique du dispositif anti-encrassement de la figure 3 mis en vibration.

La figure 6 est une représentation schématique d'un autre exemple de système de mesure comportant une surface sensible sphérique.

La figure 7 est une représentation d'un autre exemple de système de mesure comportant une surface sensible sphérique.

La figure 8 est une représentation d'un autre exemple de système de mesure permettant un traitement localisé de la surface sensible.

Les figures 9A à 9G sont des représentations schématiques de différentes étapes d'un exemple de procédé de fabrication du dispositif d'anti-encrassement de la figure 3.

La figure 10 est une représentation schématique du trajet des ondes acoustiques entre des plaques vibrantes et la surface sensible.

## EXPOSÉ DÉTAILLÉ DE MODES DE RÉALISATION PARTICULIERS

La présente demande porte sur un système de mesure offrant une protection contre le fouling ou l'encrassement améliorée.

Le biofouling peut apparaître dans l'eau de mer, l'eau douce contenu dans les lacs, les fleuves, les rivières, les réserves naturelles et artificielles des réseaux urbains. Le système de mesure est adapté pour une utilisation dans de tels milieux.

Le système de mesure comporte un capteur et un dispositif anti-encrassement ou anti-fouling. Le système est destiné à être immergé dans l'eau, soit de l'eau de mer, soit de l'eau douce, voire dans un autre liquide.

Les termes « encrassement » et « biofouling » seront considérés comme synonymes dans la présente demande.

Les termes « biofilm » et « biofouling » seront considérés comme synonymes dans la présente demande.

Le capteur peut être de différents types. Il peut être destiné à suivre des paramètres comme le taux d'oxygène dissous, la turbidité, la conductivité, le pH ou encore la fluorescence. Il peut s'agir d'un capteur optique.

Le capteur comporte au moins une surface sensible ou élément sensible porté par un support. La surface sensible est la surface qui permet au capteur de collecter le paramètre qui est destiné à être mesuré. L'élément sensible est l'élément qui permet au capteur de collecter le paramètre qui est destiné à être mesuré.

Dans le cas d'un capteur optique la surface sensible est confondue avec son support et est formée par exemple par un hublot en verre ou en un autre matériau transparent. Une sonde optique placée dans le corps du capteur derrière le hublot collecte les rayons lumineux.

Dans le cas d'un capteur de turbidité, il peut s'agir d'un capteur optique, la surface sensible est alors un hublot de verre. Dans le cas d'un capteur de pH, l'élément sensible est en contact direct avec l'eau, il s'agit par exemple de l'électrode de verre d'une sonde à pH.

Dans la suite de la description, nous allons considérer à tire d'exemple non limitatif un système de mesure optique.

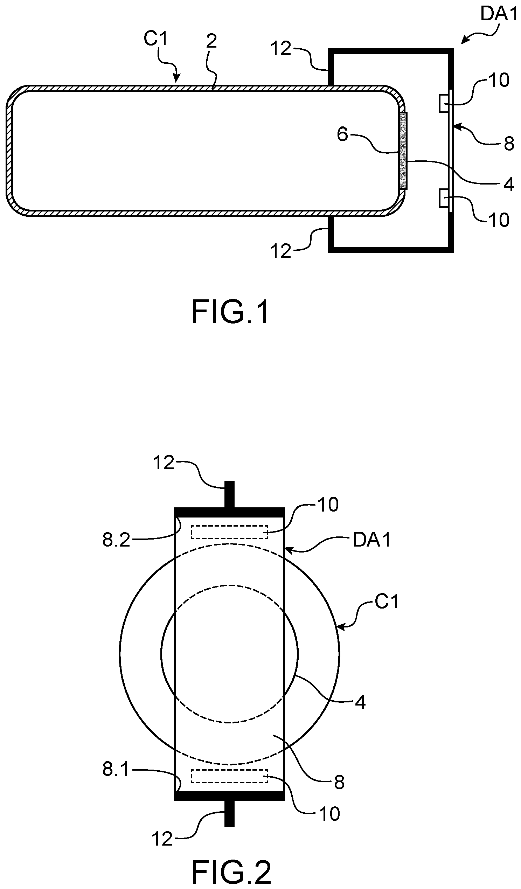

Sur les figures 1 et 2, on peut voir un système de mesure comportant un capteur, par exemple un capteur optique ou sonde optique C1 et un dispositif anti-encrassement DA1.

Le capteur C1 comporte un corps 2, une surface sensible 4 portée par un support 6. Dans cet exemple, le support 6 est un hublot présentant une épaisseur adaptée à la profondeur à laquelle le système est destiné à être immergé. Pour résister à la pression en profondeur, le support 6 a de préférence une épaisseur comprise entre une épaisseur de de l'ordre du cm et une épaisseur de l'ordre de de plusieurs cm. Cette gamme d'épaisseur induit des amplitudes de vibration faibles qui n'est pas suffisant pour une action anti fouling.

Le corps 2 contient les moyens (non représentés) permettant de capter, par la surface sensible, le paramètre à mesurer.

Le dispositif anti-encrassement DA1 comporte un élément destiné à être mis en vibration 8, des moyens 10 pour mettre en vibration l'élément 8 et des moyens de support 12 de l'élément 8 à proximité de la surface sensible 4. L'élément 8 présente une épaisseur suffisamment faible pour présenter des vibrations significatives, et une surface suffisamment importante pour générer un mouvement dans le liquide qui agisse sur toute la surface sensible. Par exemple l'élément 8 a la forme d'une plaque ou non.

Par exemple l'élément 8 a une épaisseur maximale de l'ordre du mm, voire de quelques mm.

Dans la présente demande, l'expression « à proximité » pour qualifier la disposition de l'élément vibrant par rapport à la surface sensible signifie que l'élément vibrant est disposé à une distance qui lui permet d'avoir une action sur la formation du biofilm sur la surface sensible lorsqu'il vibre. Cette distance est déterminable en fonction des actionneurs utilisés, de la tension appliquée aux bornes des actionneurs, des propriétés de l'élément vibrant, comme cela sera expliqué ci-dessous.

Les moyens de support de l'élément vibrant sont tels qu'ils n'empêchent pas ou peu l'élément de vibrer. Dans cet exemple, l'élément vibrant est une plaque de forme rectangulaire et les moyens de support comportent deux barres 12, chacune portant à une extrémité 14 une traverse à laquelle est fixé un bord 8.1, 8.2 de la plaque. Les deux bords opposés 8.1, 8.2 de la plaque 8 sont fixés à une traverse. L'autre extrémité de chaque barre 12 est fixée au corps du capteur. Les moyens de support assurent un encastrement des deux bords opposés 8.1 de la plaque.

Cet exemple de moyens de support n'est en aucun cas limitatif, par exemple l'élément vibrant peut être maintenu au niveau de tous ses côtés, les moyens de support formant un cadre. Dans ce cas le mode de vibration est amorti à proximité de la zone de maintien, i.e. du cadre

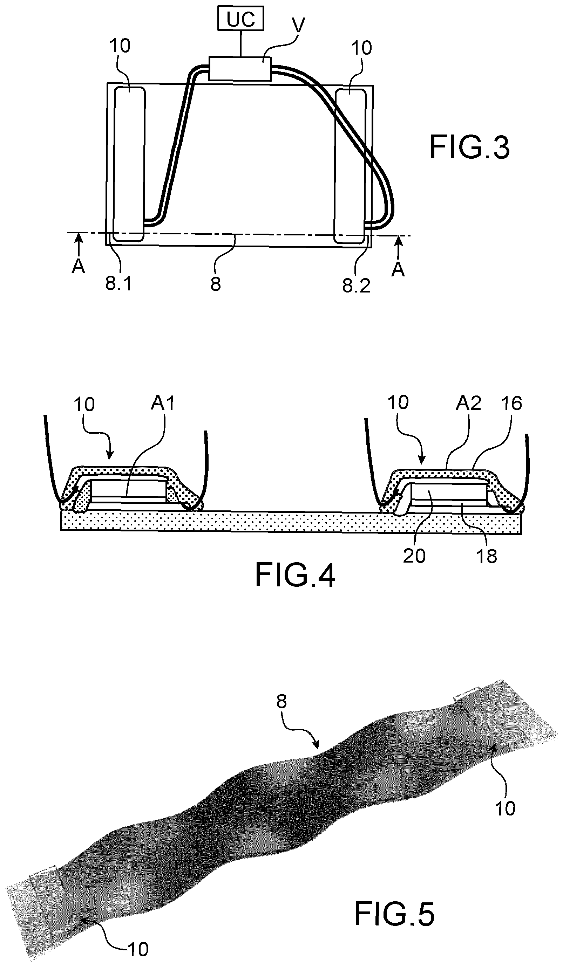

Sur les figures 3 et 4, on peut voir un exemple de dispositif anti-encrassement sans les moyens de support.

Dans cet exemple, l'élément 8 est une plaque en verre, et les moyens 10 pour mettre en vibration l'élément vibrant 8 comportent deux actionneurs électromécaniques A1, A2 disposés sur une face de la plaque et s'étendent chacun le long d'un bord 8.1, 8.2. Plus particulièrement dans cet exemple, les actionneurs sont avantageusement piézoélectriques, par exemple en PZT, en AIN, en ZnO. La mise en oeuvre d'actionneurs piézoélectriques permet une bonne intégration du système et assure un bon couplage entre les actionneurs et la plaque vibrante. Les actionneurs sont des actionneurs piézoélectriques comprenant chacun des électrodes 16, 18 et un matériau piézoélectrique 20 disposé entre et en contact électrique avec les deux électrodes 16, 18.

En variante, les actionneurs électromécaniques peuvent être magnétiques, électro-actifs, à mémoire de forme.

Les électrodes sont reliées à une source de tension alternative V commandée par une unité de commande UC. L'application d'une différence de potentiel entre les électrodes 16, 18 induit un champ électrique dans une direction hors-plan, i.e. normale à la plaque. Par effet piézoélectrique inverse, le champ électrique provoque la déformation du matériau piézoélectrique 20 dans la direction hors-plan, et dans le plan de la plaque. Cette déformation dans le plan induit un couple mécanique qui va déformer la plaque par effet bilame. En appliquant une tension alternative, la plaque est mise en vibration. De préférence, la fréquence de la tension d'alimentation des actionneurs est choisie pour que la plaque vibre à une fréquence de résonance de l'un de ses modes propres, ce qui permet de maximiser la vibration de la plaque. Un système dans lequel la plaque ne vibre pas à sa fréquence de résonance ne sort pas du cadre de la présente invention.

En variante, l'actionneur A1 est remplacé par plusieurs actionneurs disposés parallèlement au bord 8.1 de la plaque et l'actionneur est remplacé par plusieurs actionneurs disposés parallèlement à l'autre bord 8.2 de la plaque.

Le dispositif anti-encrassement étant destiné à être immergé, les actionneurs sont isolés de l'extérieur pour ne pas entrer en contact avec le liquide, par exemple chaque capteur est recouvert d'une ou plusieurs couches de protection en matériau isolant étanche au liquide et évitant les courts-circuits entre les éléments d'un actionneur. De préférence seuls les actionneurs sont recouverts de la couche de protection afin de ne pas réduire l'aptitude à la vibration de la plaque.

Selon le positionnement des actionneurs, ils peuvent être actionnés avec la même tension, avec un déphasage s'ils sont positionnés sur des zones vibrant en opposition de phase, avec des signaux différents en amplitude, voire des signaux différents en phase et en amplitude.

Les emplacements des actionneurs sont choisis de sorte qu'ils soient placés sur des zones de déplacement maximal de la plaque. Le choix de l'emplacement des actionneurs pour obtenir un effet maximal est par exemple décrit dans le *document* F. Casset et al, « Low voltage actuated plate for haptic applications with PZT thin-film », Transducers 2013.

Les actionneurs peuvent être placés en périphérie de la plaque, ou répartis sur toute la plaque. L'avantage de disposer les actionneurs sur la périphérie de la plaque est de conserver une partie centrale transparente.

Le fonctionnement du dispositif anti-encrassement va maintenant être décrit.

Un signal d'actionnement est appliqué aux actionneurs, le signal peut être fixe à une fréquence donnée, ou être un balayage en fréquence pour exciter alternativement différents modes. Il peut s'agir du même signal envoyé aux deux actionneurs ou des signaux différents. La plaque est mise en vibration, ce qui provoque des variations de pression dans le liquide, en particulier dans le liquide situé entre la surface sensible et la plaque vibrante.

Sur la figure 5, on peut voir une représentation schématique de la plaque dans un état de vibration.

Les variations de pressions induites par les vibrations de la plaque mettent en mouvement l'eau entre la plaque et la surface sensible empêchant les microorganismes de se fixer sur la surface sensible et empêchant donc le développement d'un biofilm sur la surface sensible. Les ondes acoustiques générées viennent également balayer la plaque, elles participent également à l'action anti-fouling.

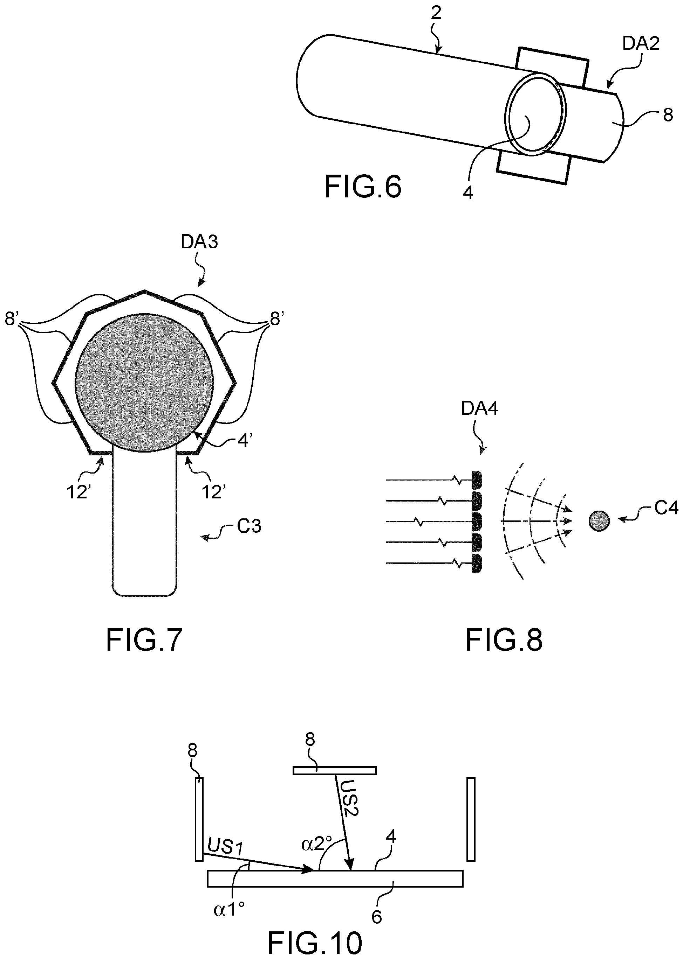

Sur la figure 10, on peut voir une représentation schématique du trajet des ondes acoustiques par exemple ultrasonores entre des plaques vibrantes et la surface sensible. Sur cette représentation plusieurs plaques vibrantes sont mises en oeuvre pour illustrer différents exemples d'orientation, celles-ci génèrent des ondes acoustiques US1, US2 dans le liquide, qui impactent la zone sensible à protéger, après transmission dans le liquide, et arrivent sur la surface sensible avec un angle $\alpha 1$, $\alpha 2$ respectivement. Les angles $\alpha 1$, $\alpha 2$ sont compris entre 5° et 85°.

Comme nous le verrons par la suite et tel que représenté sur la figure 7, le dispositif anti-encrassement peut comporter plusieurs plaques vibrantes entourant une surface sensible en trois dimensions.

Dans la présente demande, la pression acoustique désigne la différence de pression générée par les ondes émises par la vibration de l'élément vibrant, i.e. résultant du front d'onde qui se propage de l'élément vibrant.

Lorsque les variations de pression induites par les vibrations de la plaque sont suffisamment importantes, des cavitations sont générées dans l'eau autour de la plaque, notamment dans l'eau entre la plaque et la surface sensible. Les cavitations sont de petites implosions. Le front d'onde et/ou les cavitations empêchent le développement du biofilm. Si les cavitations sont suffisantes, elles peuvent provoquer le retrait du biofilm sur la surface sensible et donc réaliser un nettoyage de la surface sensible.

A titre d'exemple, il a été déterminé qu'une pression d'environ 50kPa permettait de générer de la cavitation dans le système décrit par S. Labouret, « Distribution en taille des bulles d'un champ de cavitation ultrasonore », 10ieme congrès français d'acoustique, 2010.

La mise en vibration de la plaque 8 permet au moins de limiter la formation de biofilm sur la surface sensible, mais également la formation d'un biofilm sur la plaque.

Dans un mode de fonctionnement, le dispositif anti-encrassement est activé de manière discontinue, par exemple de manière périodique. A titre d'exemple, il peut être activé toutes les heures, ou tous les jours.

Dans un autre mode de fonctionnement, le dispositif anti-encrassement est activé en permanence.

La fréquence d'activation, la durée d'activation ainsi que l'amplitude et/ou la fréquence des vibrations sont choisies en fonction de l'aptitude du liquide à former un biofilm et/ou l'aptitude de la surface sensible à se faire recouvrir par des microorganismes.

Le dispositif anti-encrassement est activé soit pour éviter l'apparition du biofilm, soit pour supprimer le film déjà formé par exemple en générant des cavitations dans le liquide.

Le retrait du biofilm peut être réalisé de manière régulière après détermination d'une période maximale au-delà de laquelle le film doit être retiré, afin d'éviter une dégradation des mesures effectuées par le capteur.

De manière avantageuse, la commande d'activation des moyens anti-encrassement est reliée à une mesure du signal du capteur. Lorsque le signal est réduit d'un facteur donné, le dispositif anti-encrassement est activé, de préférence pour générer des cavitations et provoquer le retrait du film. On peut donc envisager par exemple d'activer les actionneurs selon une première période courte de sorte que la plaque présente des vibrations suffisantes pour éviter la formation du biofilm, et selon une deuxième période plus longue de sorte que la plaque présente des vibrations suffisantes pour retirer le biofilm qui se serait formé malgré le fonctionnement du dispositif pour éviter le dépôt de microorganismes.

Dans l'exemple représenté, la projection orthogonale de la plaque sur la surface sensible est inférieure à l'aire de la surface sensible. Il suffit que les vibrations de la plaque induisent des mouvements sur toute la surface sensible. Les mouvements induits sont induits sur une surface plus grande que celle de la plaque vibrante. De préférence, le dispositif anti-encrassement est disposé au plus près de la surface sensible sans gêner les mesures.

Dans l'exemple représenté, la plaque est rectangulaire. En variante, elle peut être carrée ou circulaire.

Dans le cas d'une plaque circulaire, celle-ci peut être maintenue de façon discrète, ou sur toute sa périphérie, et l'actionneur peut être un disque au centre de la membrane présentant un rayon d'environ 50 à 60% du rayon de la membrane. Un exemple de membranes avec un tel actionneur est décrit dans le document P. Poncet et al, « Design and realization of electroactive polymer actuators for transparent end flexible haptic feedback interfaces », Eurosime 2016 ou l'actionneur peut être annulaire et être sur le bord de la membrane.

A titre d'exemple uniquement, nous allons estimer la pression acoustique générée par un dispositif anti-encrassement comportant une plaque circulaire de 2,1 cm de diamètre. La membrane se déforme dans son premier mode de résonnance (f=1kHz ; amplitude = 26$\mu$m).

Pour estimer la pression acoustique produite par cette membrane, nous pouvons utiliser « l'équation du haut-parleur » :

$$P = \frac{\sqrt{2} \cdot \pi \cdot \rho \cdot S \cdot \varepsilon \cdot f^2}{r}$$

Avec P la pression acoustique en Pa, $\rho$ la densité du milieu dans lequel la membrane est immergée, S la surface de la membrane, $\varepsilon$ l'amplitude de vibration, f la fréquence de vibration et r la distance d'écoute.

Nous obtenons une pression acoustique d'environ 2600 Pa à une distance de 5 mm de la membrane, dans l'eau. La pression étant une force rapportée à une surface, $P = \frac{F}{S} \Leftrightarrow F = P \times S$, nous pouvons estimer la force générée par la membrane dans l'eau sur une surface de l'ordre du cm$^2$, qui est une dimension typique d'un hublot de capteur immergé. Nous obtenons environ 0,26 N. Si nous considérons une surface de l'ordre de 100$\times$100 $\mu$m$^2$, qui correspond sensiblement la taille d'un microorganisme, nous obtenons une force de 26 $\mu$N.

Par analogie avec les cellules biologiques pour lesquelles les forces de détachement sont comprises approximativement entre 1 nN à 500 nN, on peut considérer que la force de 26 $\mu$N est suffisante pour au moins éviter la fixation des microorganismes.

On peut donner à titre d'exemple le dimensionnement suivant :
Le capteur comporte un hublot de 1 cm$^2$ à protéger du biofouling.

On utilise un dispositif anti-encrassement comportant une plaque circulaire en plastique (PEN ou PC par exemple) de 2,1 cm de diamètre, d'épaisseur 450$\mu$m,

qui est excité à une fréquence de travail = 1 kHz. La plaque 8 est située à 5 mm du hublot.

La plaque vibrante peut avoir une surface plus petite, égale ou plus grande que celle de la surface sensible. Néanmoins la pression étant proportionnelle à la surface de la plaque vibrante, il peut être préférable de mettre en oeuvre une plaque vibrante de grande surface.

En utilisant la formule (I) ci-dessus l'homme du métier sait déterminer pour une plaque vibrante donnée la distance à laquelle il peut la positionner par rapport à la surface sensible.

Sur la figure 6, on peut voir un autre exemple de réalisation d'un système de mesure comportant un capteur C2 et un dispositif anti-encrassement DA2 comportant au moins une plaque vibrante 8 disposée latéralement par rapport à la surface sensible.

De préférence plusieurs plaques sont réparties latéralement autour de la surface sensible afin de mettre en mouvement le liquide de manière uniforme sur toute la surface sensible et/ou d'appliquer une pression acoustique suffisante sur la surface sensible.

Les plaques peuvent être inclinées par rapport à la surface sensible.

Sur la figure 7, on peut voir un autre exemple de système de mesure comportant un capteur C3 comprenant une surface sensible 4' de forme sphérique et un dispositif anti-encrassement DA3 adapté à une telle forme. Le dispositif anti-encrassement DA3 comporte une pluralité d'éléments 8' disposés autour de la surface sensible 4', de telle sorte que leurs vibrations provoquent des mouvements du liquide sur toute la surface.

Les éléments peuvent former un polyèdre autour de la surface sensible 4'. Des passages sont prévus entre les plaques pour permettre au liquide d'entrer en contact avec la surface sensible et d'éviter un différentiel de pression sur les plaques d'anti-fouling.

Dans cet exemple, les plaques sont suspendues les unes aux autres et des moyens de support 12' fixent celles-ci au capteur.

Plus généralement, la surface sensible peut s'étendre en trois dimensions et le dispositif anti-encrassement présente une forme adaptée pour mettre le liquide en mouvement sur toute la surface sensible et/ou appliquer une pression acoustique suffisante sur la surface sensible. Le ou les éléments vibrants peuvent présenter une forme non plane.

Sur la figure 8, on peut voir représenté schématiquement un autre exemple de système de mesure comportant un capteur C4 et un dispositif anti-encrassement DA4 permettant un retrait du film de manière localisée.

Par exemple le système comporte un capteur optique et plusieurs éléments vibrants commandables indépendamment. Par exemple il peut s'agit d'une matrice de membranes vibrantes, chacune ayant son ou ses actionneurs.

Le capteur optique peut être formé par le capteur C4 du système de mesure ou un capteur additionnel.

L'unité de commande pilote celui-ci pour qu'il détecte, par exemple par traitement d'images, la présence de biofouling sur le hublot, et précise les coordonnées du biofouling. L'unité de commande actionne les actionneurs, en déphasant l'actionnement de chaque structure vibrante, et focalise géographiquement et temporellement toutes les pulsations acoustiques en ce point afin d'assurer l'anti-fouling. Il sera compris qu'il s'agit en fait d'une zone et non d'un point, les pulsations acoustiques sont localisées sur cette zone.

Le fonctionnement du dispositif DA4 peut être le suivant :

Le capteur optique détecte un biofouling et détermine ses coordonnées qu'il fournit à l'unité de commande. Si le biofouling n'est pas considéré comme perturbant le fonctionnement du capteur C4, son retrait peut être reporté.

L'unité de commande détermine à l'aide d'algorithmes, l'actionnement de chaque actionneur pour focaliser les impulsions acoustiques sur les coordonnées du biofouling et provoquer un déplacement de liquide et/ou l'application d'une pression acoustique à ces coordonnées.

Simultanément le capteur optique vérifie l'enlèvement du biofilm. Lorsqu'il est détecté que le biofilm a été retiré ou au moins suffisamment retiré, le dispositif d'anti-encrassement est arrêté.

Il sera compris que si des microorganismes sont localisés à plusieurs emplacements les actionneurs peuvent être commandés pour agir sur les différents emplacements simultanément ou successivement.

Il peut être envisagé différents modes de fonctionnement du dispositif DA4. Par exemple il peut être actionné périodiquement pour au moins empêcher le dépôt d'un biofilm. Des contrôles périodiques de la présence ou non d'un biofilm par le capteur optique sont effectués et, si un film s'est formé, une action localisée est commandée. Le contrôle de la présence d'un biofilm peut être réalisé avec une période différente de celle d'actionnement des éléments vibrants pour au moins limiter la formation du biofilm.

Dans les exemples décrits, un ou plusieurs éléments vibrants est ou sont mis en oeuvre pour traiter une surface sensible. Il sera compris qu'un élément vibrant peut être utilisé pour traiter plusieurs surface sensibles de plusieurs capteurs de même type ou non en utilisant un élément vibrant adapté pour avoir une action sur les différentes surfaces sensibles. Dans ce cas, on peut envisager d'utiliser le dispositif DA4 pour localiser son action sur les différentes surfaces sensibles successivement.

Dans une variante, le ou les éléments vibrants comportent des trous, qui peuvent faciliter le déplacement de l'élément vibrant en limitant l'amortissement dû à la présence du liquide.

Un exemple de procédé de fabrication d'un élément vibrant mis en oeuvre dans un dispositif anti-encrassement tel que le dispositif DA1 va maintenant être décrit.

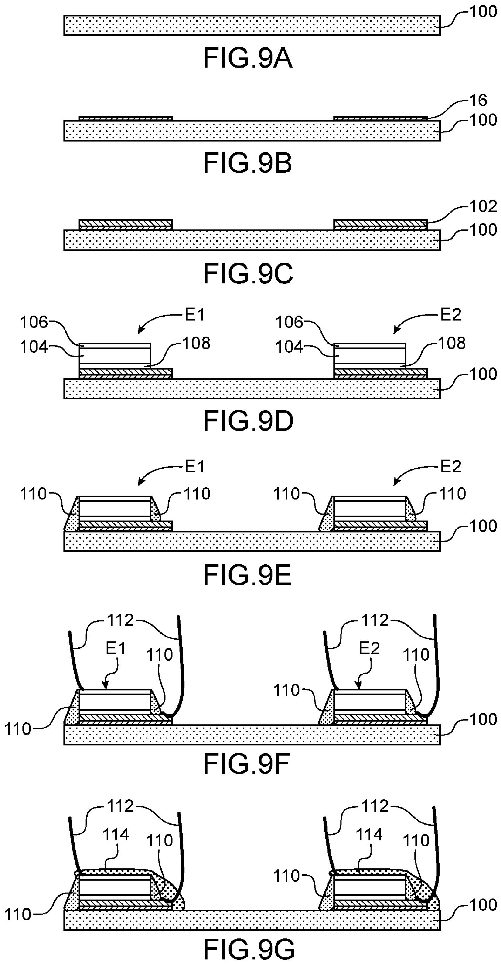

On utilise un substrat 100 adapté au capteur de mesure que l'on souhaite protéger du biofouling. Par exemple dans le cas d'un capteur optique, on choisit de préférence un substrat transparent, par exemple en verre, limitant les risques de gêner les mesures optiques du capteur. Le substrat est visible sur la figure 9A.

Lors d'une étape suivante on forme les pistes électriques qui vont nous permettre de reprendre le contact électrique sur l'électrodes inférieures 16 des actionneurs par exemple par sérigraphie. On pourra utiliser par exemple de l'or ou de l'argent.

L'élément ainsi obtenu est représenté sur la figure 9B.

Ensuite, on dépose une couche de colle conductrice 102 sur les électrodes inférieures 16, par exemple de la pâte d'argent.

L'élément ainsi obtenu est représenté sur la figure 9C.

On fournit des empilements E1, E2 comportant un matériau piézoélectrique 104, par exemple un matériau céramique et des électrodes 106, 108 de part et d'autre du matériau piézoélectrique 104

Les empilements sont solidarisés aux électrodes inférieures par la colle 102.

L'élément ainsi obtenu est représenté sur la figure 9D.

Lors de l'étape suivante, on dépose une couche de matériau isolant 110 sur les bords latéraux des empilements. Un polymère peut être dispensé tout autour de l'actionneur puis celui est réticulé. Le matériau de la couche 110 isole les empilements de l'environnement extérieur et est isolant électrique évitant le court-circuit entre les électrodes de chaque empilement.

L'élément ainsi obtenu est représenté sur la figure 9E.

Lors d'une étape suivante, on relie des connecteurs électriques 112 aux électrodes pour permettre l'application d'une tension au matériau piézoélectrique.

L'élément ainsi obtenu est représenté sur la figure 9F.

Lors d'une étape suivante, une autre couche de matériau isolant 114 est formée sur l'empilement et formant avec la couche 110 une couverture étanche isolant les actionneurs de l'environnement extérieur, par exemple l'eau de mer. La couche 114 peut être formée comme la couche 110. Le matériau de la couche 114 et celui de la couche 110 peuvent être identiques ou différents.

Sur la figure 9G, on peut voir un élément vibrant prêt à être monté à proximité d'une surface sensible d'un capteur par exemple au moyen de bras ou de tiges.

Avantageusement, dans le cas d'un capteur optique, les actionneurs et/ou les couches isolantes sont positionnés dans une zone où la transparence n'est pas requise.

## Revendications

1. Système de mesure destiné à être immergé dans un liquide, comportant au moins un capteur (C1, C2, C3, C4) d'au moins un paramètre, ledit capteur (C1, C2, C3, C4) comportant au moins une surface sensible (4, 4') permettant au capteur de mesurer ledit paramètre, ladite surface sensible (4, 4') étant destinée à être en contact avec le liquide, et un dispositif anti-encrassement (DA1, DA2, DA3, DA4) comportant au moins un élément (8, 8') disposé à proximité d'au moins une partie de la surface sensible (4, 4'), des moyens (10) pour mettre en vibration ledit élément (8, 8') de sorte à générer une onde acoustique apte à au moins limiter la fixation de microorganismes sur la surface sensible (4, 4') en repoussant ou détachant ledit microorganisme en mettant en mouvement le liquide entre l'élément (8, 8') et la surface sensible (4, 4'), et une unité de commande configurée pour commander les moyens pour mettre en vibration l'élément (8, 8').

2. Système de mesure selon la revendication 1, dans lequel ledit élément (8) a une forme de plaque plane ou non et dans lequel les moyens (10) pour mettre en vibration l'élément comportent au moins un actionneur (A1, A2) fixé sur une des faces de l'élément.

3. Système de mesure selon la revendication 1 ou 2, dans lequel ledit élément (8,8') présente une épaisseur faible par rapport à ses deux autres dimensions.

4. Système de mesure selon l'une des revendications 1 à 3, dans lequel l'élément (8) est une plaque rectangulaire et les moyens pour mettre en vibration l'élément comportent au moins un actionneur (A1, A2) le long de chacun de deux bords opposés (8.1, 8.2) de la plaque de sorte à pouvoir déformer la plaque par effet bilame.

5. Système de mesure selon l'une des revendications 1 à 4, dans lequel l'élément (8 8') est suspendu à proximité de la surface sensible par des moyens de support (12, 12') autorisant sa mise en vibration.

6. Système de mesure selon l'une des revendications 1 à 5, dans lequel l'élément (8) est disposé en regard de la surface sensible (4), avantageusement la surface sensible étant plane (4) et l'élément (8) étant une plaque plane, ou la surface sensible (4') étant en trois dimensions et le dispositif anti-encrassement entourant la surface sensible (8').

7. Système de mesure selon l'une des revendications précédentes, dans lequel le dispositif anti-encrassement comporte plusieurs éléments (8').

8. Système de mesure selon l'une des revendications précédentes, dans lequel le capteur (C1) est un capteur optique, la surface sensible étant portée par un hublot, et l'élément (8) est réalisé avec un matériau transparent.

9. Système de mesure selon l'une des revendications précédentes en combinaison avec la revendication 2, dans lequel ledit au moins un actionneur (A1, A2) est un actionneur piézoélectrique.

10. Système de mesure selon l'une des revendications précédentes, dans lequel l'unité de commande (UC) est configurée pour commander l'actionnement du dispositif anti-encrassement périodiquement, et/ou dans lequel l'unité de commande (UC) actionne le dispositif anti-encrassement de sorte qu'il crée des cavitations.

11. Système de mesure selon l'une des revendications précédentes comportant un capteur optique et dans lequel l'unité de commande est configurée pour commander le capteur optique pour qu'il vérifie la présence de microorganismes sur l'élément sensible, et pour actionner le dispositif anti-encrassement lorsque la présence de microorganismes est détectée et est considérée comme perturbant le fonctionnement du capteur.

12. Système de mesure selon la revendication précédente, dans lequel le capteur optique est commandé pour déterminer l'emplacement des microorganismes, et dans lequel le dispositif anti-encrassement est commandé pour générer un déplacement du liquide localisé au niveau desdits microorganismes.

13. Procédé de fonctionnement du système de mesure selon l'une des revendications précédentes, dans lequel le système de mesure est immergé dans un environnement liquide de sorte que ladite surface sensible (4, 4') soit en contact avec le liquide, et le dispositif anti-encrassement est commandé pour au moins limiter le dépôt de microorganismes sur la surface sensible et/ou pour retirer les microorganismes déposés sur la surface sensible.

14. Procédé de fonctionnement selon la revendication précédente, dans lequel le dispositif anti-encrassement est activé périodiquement, et/ou dans lequel l'élément est mis en vibration de sorte que la variation de pression générée crée des cavitations dans le liquide.

15. Procédé de fonctionnement selon les revendications 13 ou 14, comportant :

   - la détermination du ou des emplacements de microorganismes sur la surface sensible,
   - l'activation des moyens pour mettre en vibration les éléments pour provoquer un mouvement de liquide au niveau du ou des emplacements déterminés.

**Patentansprüche**

1. Messsystem, das dazu bestimmt ist, in eine Flüssigkeit eingetaucht zu werden, und mindestens einen Sensor (C1, C2, C3, C4) für mindestens einen Parameter aufweist, wobei der Sensor (C1, C2, C3, C4) mindestens eine empfindliche Oberfläche (4, 4') aufweist, die es dem Sensor ermöglicht, den Parameter zu messen, wobei die empfindliche Oberfläche (4, 4') dazu bestimmt ist, mit der Flüssigkeit in Kontakt zu stehen, und eine Anti-Schmutzvorrichtung (DA1, DA2, DA3, DA4) mindestens ein Element (8, 8'), das in der Nähe zumindest eines Teils der empfindlichen Oberfläche (4, 4') angeordnet ist, ein Mittel (10), um das Element (8, 8') in Schwingung zu versetzen, um eine akustische Welle zu erzeugen, die geeignet ist, die Anhaftung von Mikroorganismen an der empfindlichen Oberfläche (4, 4') zumindest zu begrenzen, indem der Mikroorganismus abgestoßen oder abgelöst wird, indem die Flüssigkeit zwischen dem Element (8, 8') und der empfindlichen Oberfläche (4, 4') in Bewegung gesetzt wird, und eine Steuereinheit aufweist, die dazu konfiguriert ist, das Mittel zu steuern, um das Element (8, 8') in Schwingung zu versetzen.

2. Messsystem nach Anspruch 1, wobei das Element (8) die Form einer flachen Platte hat oder nicht, und wobei das Mittel (10), um das Element in Schwingung zu versetzen, mindestens einen Aktuator (A1, A2) umfasst, der an einer der Flächen des Elements befestigt ist.

3. Messsystem nach Anspruch 1 oder 2, wobei das Element (8, 8') in Bezug auf seine beiden anderen Abmessungen eine geringe Dicke aufweist.

4. Messsystem nach einem der Ansprüche 1 bis 3, wobei das Element (8) eine rechteckige Platte ist und das Mittel, um das Element in Schwingung zu versetzen, mindestens einen Aktuator (A1, A2) entlang jeder von zwei gegenüberliegenden Kanten (8.1, 8.2) der Platte umfasst, um die Platte durch den Bimetall-Effekt verformen zu können.

5. Messsystem nach einem der Ansprüche 1 bis 4, wobei das Element (8, 8') in der Nähe der empfindlichen Oberfläche von einem Haltemittel (12, 12') aufgehängt wird, die ermöglichen, es in Schwingung zu versetzen.

6. Messsystem nach einem der Ansprüche 1 bis 5, wobei das Element (8) der empfindlichen Oberfläche (4) zugewandt angeordnet ist, wobei vorteilhafterweise die empfindliche Oberfläche flach ist (4) und das Element (8) eine flache Platte ist, oder wobei die empfindliche Oberfläche (4') dreidimensional ist und die Anti-Schmutzvorrichtung die empfindliche Oberfläche (8') umgibt.

7. Messsystem nach einem der vorhergehenden Ansprüche, wobei die Anti-Schmutzvorrichtung mehrere Elemente (8') aufweist.

8. Messsystem nach einem der vorhergehenden Ansprüche, wobei der Sensor (C1) ein optischer Sensor ist, die empfindliche Oberfläche von einem Sichtfenster getragen wird und das Element (8) aus einem transparenten Material besteht.

9. Messsystem nach einem der vorhergehenden Ansprüche in Kombination mit Anspruch 2, wobei der mindestens eine Aktuator (A1, A2) ein piezoelektrischer Aktuator ist.

10. Messsystem nach einem der vorhergehenden Ansprüche, wobei die Steuereinheit (UC) dazu konfiguriert ist, die Betätigung der Anti-Schmutzvorrichtung periodisch zu steuern, und/oder wobei die Steuereinheit (UC) die Anti-Schmutzvorrichtung derart betätigt, dass sie Kavitationen erzeugt.

11. Messsystem nach einem der vorhergehenden Ansprüche, das einen optischen Sensor aufweist und wobei die Steuereinheit dazu konfiguriert ist, den optischen Sensor zu steuern, damit er das Vorhandensein von Mikroorganismen auf dem empfindlichen Element überprüft, und die Anti-Schmutzvorrichtung zu betätigen, wenn das Vorhandensein von Mikroorganismen detektiert und die Anwesenheit als störend für den Betrieb des Sensors angesehen wird.

12. Messsystem nach dem vorhergehenden Anspruch, wobei der optische Sensor gesteuert wird, um die Position der Mikroorganismen zu bestimmen, und wobei die Anti-Schmutzvorrichtung gesteuert wird, um eine Bewegung der an den Mikroorganismen lokalisierten Flüssigkeit zu erzeugen.

13. Betriebsverfahren für das Messsystem nach einem der vorhergehenden Ansprüche, wobei das Messsystem in eine flüssige Umgebung eingetaucht wird, so dass die empfindliche Oberfläche (4, 4') in Kontakt mit der Flüssigkeit steht, und die Anti-Schmutzvorrichtung gesteuert wird, um die Ablagerung von Mikroorganismen auf der empfindlichen Oberfläche zumindest zu begrenzen und/oder die auf der empfindlichen Oberfläche abgelagerten Mikroorganismen zu entfernen.

14. Betriebsverfahren nach dem vorhergehenden Anspruch, wobei die Anti-Schmutzvorrichtung periodisch aktiviert wird und/oder wobei das Element in Schwingungen versetzt wird, so dass die erzeugte Druckschwankung Kavitationen in der Flüssigkeit erzeugt.

15. Betriebsverfahren nach den Ansprüchen 13 oder 14, das Folgendes aufweist:

- Bestimmen der Position bzw. der Positionen von Mikroorganismen auf der empfindlichen Oberfläche,
- Aktivieren des Mittels, um die Elemente in Schwingung zu versetzen, um eine Flüssigkeitsbewegung an der bestimmten Position bzw. den bestimmten Positionen zu bewirken.

**Claims**

1. A measuring system intended to be immersed in a liquid, including at least one sensor (C1, C2, C3, C4) of at least one parameter, said sensor (C1, C2, C3, C4) including at least one sensitive surface (4, 4') allowing the sensor to measure said parameter, said sensitive surface (4, 4') being intended to be in contact with the liquid, and an anti-fouling device (DA1, DA2, DA3, DA4) including at least one element (8, 8') disposed near at least part of the sensitive surface (4, 4'), means (10) for vibrating said element (8, 8') so as to generate an acoustic wave capable of at least limiting the attachment of microorganisms to the sensitive surface (4, 4') by repelling or detaching said microorganism by moving the liquid between the element (8, 8') and the sensitive surface (4, 4'), and a control unit configured to control the means for vibrating the element (8, 8').

2. The measuring system according to claim 1, wherein said element (8) has the shape of a flat plate or not and wherein the means (10) for vibrating the element include at least one actuator (A1, A2) fixed on one of the faces of the element.

3. The measuring system according to claim 1 or 2, wherein said element (8, 8') has a small thickness compared to its two other dimensions.

4. The measuring system according to one of claims 1 to 3, wherein the element (8) is a rectangular plate and the means for vibrating the element include at least one actuator (A1, A2) along each of two opposite edges (8.1, 8.2) of the plate so as to be able to deform the plate by bimetallic effect.

5. The measuring system according to one of claims 1 to 4, wherein the element (8,8') is suspended near the sensitive surface by support means (12, 12') allowing it to vibrate.

6. The measuring system according to one of claims 1 to 5, wherein the element (8) is disposed facing the sensitive surface (4), advantageously the sensitive surface being flat (4) and the element (8) being a flat plate, or the sensitive surface (4') being in three dimensions and the anti-fouling device surrounding the sensitive surface (8').

7. The measuring system according to one of the preceding claims, wherein the anti-fouling device includes several elements (8').

8. The measuring system according to one of the preceding claims, wherein the sensor (C1) is an optical sensor, the sensitive surface being carried by a porthole, and the element (8) is made of a transparent material.

9. The measuring system according to one of the preceding claims as combined with claim 2, wherein said at least one actuator (A1, A2) is a piezoelectric actuator.

10. The measuring system according to one of the preceding claims, wherein the control unit (UC) is configured to control the actuation of the anti-fouling device periodically, and/or wherein the control unit (UC) activates the anti-fouling device so that it creates cavitations.

11. The measuring system according to one of the preceding claims including an optical sensor and wherein the control unit is configured to control the optical sensor so that it checks the presence of microorganisms on the sensitive element, and to actuate the anti-fouling device when the presence of microorganisms is detected and is considered to disrupt the operation of the sensor.

12. The measuring system according to the preceding claim, wherein the optical sensor is controlled to determine the location of the microorganisms, and wherein the anti-fouling device is controlled to generate a movement of the liquid localised at said microorganisms.

13. A method for operating the measuring system according to one of the preceding claims, wherein the measuring system is immersed in a liquid environment so that said sensitive surface (4, 4') is in contact with the liquid, and the anti-fouling device is controlled to at least limit the deposition of microorganisms on the sensitive surface and/or to remove the microorganisms deposited on the sensitive surface.

14. The operating method according to the preceding claim, wherein the anti-fouling device is activated periodically, and/or wherein the element is vibrated so that the generated variation in pressure creates cavitations in the liquid.

15. The operating method according to claims 13 or 14, including:

- determining the location(s) of microorganisms on the sensitive surface,
- activating the means for vibrating the elements to cause a movement of liquid at the determined location(s).

FIG.1

FIG.2

FIG.3

FIG.4

FIG.5

FIG.6

FIG.7

FIG.8

FIG.10

FIG.9A

FIG.9B

FIG.9C

FIG.9D

FIG.9E

FIG.9F

FIG.9G

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008020887 A2

- US 9116102 B2

**Littérature non-brevet citée dans la description**

- **M. RAHMOUNE ; M. LATOUR.** Application of Mechanical Waves Induced by Piezofilms to Marine Fouling Prévention. *Smart Mater. Struct.,* 1995, vol. 4, 195
- **F. CASSET et al.** Low voltage actuated plate for haptic applications with PZT thin-film. *Transducers,* 2013

- **S. LABOURET,.** *Distribution en taille des bulles d'un champ de cavitation ultrasonore,* 2010
- **P. PONCET et al.** Design and realization of electroactive polymer actuators for transparent end flexible haptic feedback interfaces. *Eurosime,* 2016